# EUROPEAN PATENT APPLICATION

(11) **EP 3 680 012 A1**
(43) Date of publication of application: **15.07.2020**
(21) Application number: 18854042.1
(22) Date of filing: 05.09.2018
(51) Int. Cl.: B01J 19/00, B01F 7/18, B01F 7/24

(54) **REACTOR**

(30) Priority: 07.09.2017 KR 20170114289
(71) Applicant: LG Chem, Ltd., Seoul 07336 (KR)
(72) Inventor: KIM, Dae Hun, Daejeon 34122 (KR); SONG, Young Soo, Daejeon 34122 (KR); IM, Ye Hoon, Daejeon 34122 (KR); JUNG, Hyun Tae, Daejeon 34122 (KR)
(74) Representative: Goddar, Heinz J.
(86) International application number: PCT/KR2018/010363
(87) International publication number: WO 2019/050271

(57) **Abstract**

The present invention relates to a reactor, and according to one aspect of the present invention, there is provided a reactor comprising a housing having a reaction space in which a reactant is accommodated, an outlet pipe connected to a lower part of the reaction space, a rotating shaft disposed in the housing and stirring blades mounted on the rotating shaft, wherein the housing has a lower converging region with a smaller cross-sectional area toward the outlet pipe side, at least a part of the stirring blades is located in the lower converging region and the outlet pipe comprises a first region having a reduced cross-sectional area along the discharge direction of the reactant and connected to the lower converging region, and a second region extending along the discharge direction from the first region and having a constant cross-sectional area.

## Description

### Technical Field

The present invention relates to a reactor.

This application claims the benefit of priority based on Korean Patent Application No. 10-2017-0114289 filed on September 7, 2017, the disclosure of which is incorporated herein by reference in its entirety.

### Background Art

In the case of the product having Bingham characteristics of filler products well used in the pharmaceutical industry, a homogenizing operation of the relevant product takes a lot of time.

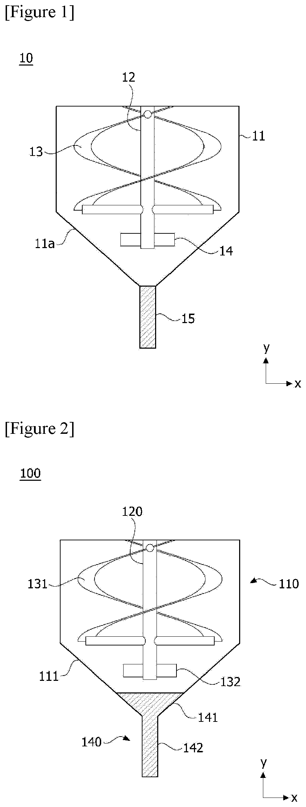

Figure 1 is a schematic diagram showing a general reactor (10).

Referring to Figure 1, the reactor (10) comprises a housing (11), an outlet pipe (15) connected to a lower part of a reaction space of the housing (11), a rotating shaft (12) disposed in the housing and stirring blades (13, 14) mounted on the rotating shaft (12), and the homogenizing operation is performed by supplying a Bingham fluid to the housing (11) and rotating the stirring blades (13, 14).

On the other hand, in order to discharge the homogenized Bingham fluid from the reactor (10), a certain pressure is applied to the upper part of the reactor, where if the outlet area of the outlet pipe is wide, the pressure distribution on the cross section of the reactor is uneven, and thus there is a problem that only the fluid located at the center part is discharged through the outlet pipe and the fluid near the side wall of the housing is attached to the wall surface and is not discharged.

In order to prevent this, a lower region (11a) in the form, in which the radius (length in the x-axis direction) becomes narrower toward the lower end (lower part in the y-axis direction) of the reactor (10), is applied and the outlet region is narrowed to an appropriate level.

However, the shear force by the stirring blades (13, 14) is not sufficiently transferred in the lower region (11a) near the outlet pipe (15) and the Bingham fluid moves very slowly with a high viscosity, and thus there is a problem that the homogenization of the product must be performed very long.

### Disclosure

### Technical Problem

It is a problem to be solved by the present invention to provide a reactor capable of improving mixing performance when mixing a high viscosity fluid.

### Technical Solution

To solve the above-described problem, according to one aspect of the present invention, there is provided a reactor comprising a housing having a reaction space in which a reactant is accommodated, an outlet pipe connected to a lower part of the reaction space, a rotating shaft disposed in the housing and stirring blades mounted on the rotating shaft, wherein the housing has a lower converging region with a smaller cross-sectional area toward the outlet pipe side, at least a part of the stirring blades is located in the lower converging region and the outlet pipe comprises a first region having a reduced cross-sectional area along the discharge direction of the reactant and connected to the lower converging region, and a second region extending along the discharge direction from the first region and having a constant cross-sectional area.

### Advantageous Effects

As described above, the reactor related to one example of the present invention has the following effects.

The shear force by the impeller can be sufficiently transferred to the lower discharge region of the reactor, and thus the homogenization of the reactant can be performed quickly.

Also, when stirring a high viscosity fluid such as a Bingham fluid, the high viscosity region at the lower end of the reactor can be reduced and the mixing performance can be improved.

### Brief Description of Drawings

Figure 1 is a schematic diagram showing a general reactor.
Figure 2 is a schematic diagram showing a reactor associated with one example of the present invention.
Figure 3 shows the analysis result showing the viscosity distribution in the reactor of Figure 1.
Figure 4 shows the analysis result showing the viscosity distribution in the reactor of Figure 3.
Figure 5 is a graph for comparing mixing performance of the reactors according to Figures 1 and 3.

### Mode for Invention

Hereinafter, a reactor according to one example of the present invention will be described in detail with reference to the accompanying drawings.

In addition, the same or similar reference numerals are given to the same or corresponding components regardless of reference numerals, of which redundant explanations will be omitted, and for convenience of explanation, the size and shape of each constituent member as shown may be exaggerated or reduced.

Figure 2 is a schematic diagram showing a reactor (100) associated with one embodiment of the present invention.

The reactor (100) comprises a housing (110) having a reaction space in which a reactant is accommodated and an outlet pipe (140) connected to a lower part of the reaction space. The reactor (100) also comprises a rotating shaft (120) disposed in the housing (110) in the height direction (y-axis direction) and stirring blades (131, 132) mounted on the rotating shaft (120). In addition, the reactor (100) comprises a driving part for rotating the rotating shaft (120).

Furthermore, the reactant may be a Bingham fluid as a high viscosity fluid.

In addition, the housing (110) has a lower converging region (111) in which the cross-sectional area (or the radius (length in the x-axis direction)) decreases toward the outlet pipe (120) side.

Also, at least a part (e.g., 132) of the stirring blades (131, 132) is located in the lower converging region (111). The stirring blades are installed along the height direction of the rotating shaft, and for example, two or more kinds of stirring blades may be installed in predetermined regions in order along the height direction of the rotating shaft. In addition, the stirring blades may comprise a spiral blade (131) and a paddle-shaped blade (132). At this time, the paddle-shaped blade (132) may be located in the lower converging region (111).

The outlet pipe (140) comprises a first region (141) having a reduced cross-sectional area along the discharge direction of the reactant and connected to the lower converging region (111), and a second region (142) extending along the discharge direction from the first region (141) and having a constant cross-sectional area. The outlet pipe (140) may have a roughly funnel shape. For homogenization improvement and easy discharge of the Bingham fluid, the outlet pipe can be designed to have a wide outlet diameter (first region).

In addition, the maximum diameter of the first region (141) in the outlet pipe (140) may be the same as the minimum diameter of the lower converging region (111). At this time, the inner peripheral surface of the lower converging region (111) in the housing and the inner peripheral surface of the first region (141) in the outlet pipe (140) can form the same surface without a step. In addition, the length of the lower converging region (141) may be greater than the length of the first region (141) based on the discharge direction (the y-axis direction or the height direction of the rotation axis).

Furthermore, the minimum diameter of the first region (141) in the outlet pipe (130) may be the same as the diameter of the second region (142).

Also, the reactor (100) may comprise a pressurizing part for applying pressure to an upper region of the reaction space when the reactant is discharged.

Referring to Figure 2, it can be confirmed that the gap between the first region and the stirring blade (132) is reduced by the outlet pipe (140) and the volume of the lower converging region (111) is reduced as compared to the reactor of Figure 1.

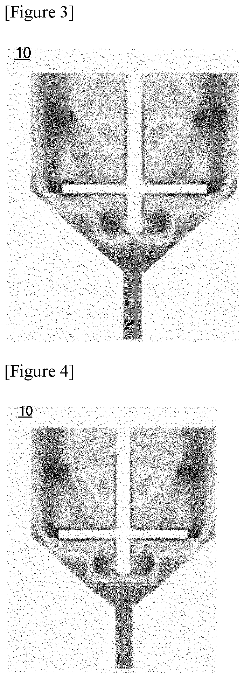

Figure 3 shows the analysis result showing the viscosity distribution in the reactor (10) of Figure 1, and Figure 4 shows the analysis result showing the viscosity distributions in the reactor (100) of Figure 3.

Referring to Figure 4, the lower mixing performance increases because the shear force is transferred more largely when the stirring blade rotates.

Furthermore, for easy discharge of the fluid, the outlet pipe (140) is configured in the form in which the radius becomes narrower toward the lower part, so that even when the pressure is applied at the upper part of the reactor during discharge, the pressure distribution on the cross section of the reactor can be formed evenly, and thus the production amount can be maintained.

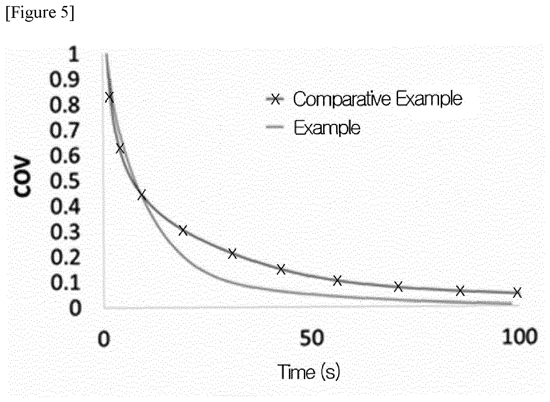

In addition, Figure 5 is a graph for comparing mixing performance of the reactors according to Figure 1 (Comparative Example) and Figure 3 (Example).

In order to confirm the mixing performance of the lower region in the reactor, a CoV (coefficient of variation) has been used as a mixing index, where it can be determined that the closer the CoV is to zero, the more excellent the mixing performance is.

As shown in Figure 3, it can be confirmed that the decrease of CoV according to the time after improvement is accelerated, whereby it can be confirmed that the mixing performance is improved.

The preferred examples of the present invention as described above are disclosed for illustrative purposes, which can be modified, changed and added within thought and scope of the present invention by those skilled in the art and it will be considered that such modification, change and addition fall within the following claims.

### Industrial Applicability

According to the reactor related to one example of the present invention, when the high viscosity fluid such as the Bingham fluid is stirred, the high viscosity region at the lower end of the reactor can be reduced and the mixing performance can be improved.

## Claims

1. A reactor comprising:
a housing having a reaction space in which a reactant is accommodated;
an outlet pipe connected to a lower part of the reaction space;
a rotating shaft disposed in the housing; and
stirring blades mounted on the rotating shaft,
wherein the housing has a lower converging region with a smaller cross-sectional area toward the outlet pipe side,
at least a part of the stirring blades is located in the lower converging region and
the outlet pipe comprises a first region having a reduced cross-sectional area along the discharge direction of the reactant and connected to the lower converging region, and a second region extending along the discharge direction from the first region and having a constant cross-sectional area.

2. The reactor according to claim 1,
wherein the maximum diameter of the first region in the outlet pipe is the same as the minimum diameter of the lower converging region.

3. The reactor according to claim 1,
wherein the minimum diameter of the first region is the same as the diameter of the second region.

4. The reactor according to claim 1,
wherein the stirring blades comprise a spiral blade, and a paddle-shaped blade.

5. The reactor according to claim 4,
wherein the paddle-shaped blade is located in the lower converging region.

6. The reactor according to claim 1,
wherein the reactant is a Bingham fluid.

7. The reactor according to claim 1,
comprising a pressurizing part for applying pressure to an upper region of the reaction space when the reactant is discharged.
